# EUROPEAN PATENT SPECIFICATION

(11) **EP 0 713 792 B1**
(45) Date of publication and mention of the grant of the patent: **17.05.2000**
(21) Application number: 95118199.9
(22) Date of filing: 20.11.1995
(51) Int. Cl.: B60H 1/34, B60H 1/24, B60S 1/02, B60K 37/00, G02B 27/01

(54) **Air-conditioning system for a motor vehicle**
Fahrzeugklimaanlage
Conditionneur d'air pour véhicule automobile

(30) Priority: 25.11.1994 IT TO940964
(43) Date of publication of application: 29.05.1996
(73) Proprietor: CENTRO RICERCHE FIAT Società Consortile per Azioni, I-10043 Orbassano (Torino) (IT)
(72) Inventor: Malvicino, Carloandrea, I-10146 Torino (IT); Palazzetti, Mario, I-10051 Avigliana (IT)
(74) Representative: Quinterno, Giuseppe

(56) References cited:
- EP-A- 0 368 017
- EP-A- 0 508 323
- EP-A- 0 646 500
- FR-A- 2 074 471
- FR-A- 2 541 958
- FR-A- 2 590 789
- GB-A- 1 040 469
- US-A- 4 741 256

## Description

The present invention relates generally to air-conditioning systems for the passenger compartments of motor vehicles. More specifically, the invention relates to an air-conditioning system of the kind defined in the preamble of Claim 1.

Modern motor vehicles are constructed with ever larger glazed areas. More particularly, the windscreen has become ever wider and more inclined to the horizontal.

The new motor vehicle geometries have however increased the effect of radiation exchange. The glazed areas are indeed of such a width that the interior of the passenger compartment is extremely exposed to solar radiation. This means that in strong sunlight (for example on a summer's day) a very large quantity of thermal energy, essentially in the form of infra-red radiation, enters the passenger compartment. It is known that black or dark-coloured objects placed within a closed motor vehicle, that is with no internal air circulation, parked in the sun may reach very high temperatures (above 100°C).

This problem is particularly noticeable in the case of the dashboard, that is, the component of the passenger compartment which is situated in front of the driver and the front passenger and in which the instrument panel, glove box, other compartments, switches, controls, air outlets etc are located. The dashboard is located exactly beneath the windscreen whereby it is fully exposed to sunlight and is typically dark and opaque in colour so as to avoid irritating light reflections, whether direct or indirect, through the windscreen to the driver.

The upper surface of the dashboard, that is, that located directly beneath the windscreen is thus one of the components within the passenger compartment which is most subject to heating by solar radiation. This phenomenon is so considerable that it is a problem not only when the motor vehicle is stationary but also when the motor vehicle is moving. In fact, even during movement, that is, with air circulating within the passenger compartment, the dashboard may reach high temperatures due to irradiation by sunlight. This fact may be irritating to the driver and to the passenger since the dashboard, being hot, in turn emits infra-red radiation which is felt as heat by the driver who must then put up with an irritating temperature which is difficult to compensate for by the cold air jets.

In order to avoid this and other problems, so-called athermal glass has been introduced recently into most motor vehicles. Such athermal glass is characterised in that it is partially opaque to infra-red radiation and thus limits its ingress into the passenger compartment to a substantial extent. Athermal windows, however, reduce the quantity of infra-red radiation that penetrates the passenger compartment by absorbing it and they are, for this reason, heated in their turn. Athermal windows thus themselves emit infra-red radiation towards the driver. Clearly athermal windows do not solve the said problem but this is reduced by expensive IR-reflective windows which are not yet commercially available.

An air-conditioning system of the initially defined kind is disclosed in GB-A-1 040 469. In this prior system the air-permeable portion of the upper surface of the dashboard is shaped and oriented in such a way that a substantial portion of the radiation which through the windscreen impinges thereon is reflected towards the occupants of the vehicle.

The object of the invention is to provide an air conditioning system which enables the above-indicated problems to be solved satisfactorily.

According to the invention this object is achieved by the air-conditioning system defined in Claim 1.

Further advantages and characteristics of the present invention will become apparent from the detailed description given below with the aid of the appended drawings, provided purely by way of non-limitative example, in which:
- Figure 1 is a schematic sectional view of an air-conditioning system,
- Figure 2 is a schematic sectional view of an alternative embodiment of an air-conditioning system,
- Figure 3 is a schematic perspective view of a further alternative embodiment of an air-conditioning, and
- Figure 4 is a schematic sectional view of an air-conditioning system of the present invention.

It is known that various air outlets are provided in the dashboards of current motor vehicles for admitting air to the passenger compartment. The air supplied from the air outlets may be air taken from inside or outside the motor vehicle, and may be heated by means of a heating system or cooled by a conditioning system in order to make the passenger compartment more comfortable for the vehicle occupants from the point of view of its temperature.

In order to enable air to be output from the air outlets, an air-conditioning unit is typically installed in a central position in the dashboard structure with controls arranged on the surface of the dashboard itself. This air-conditioning unit typically includes at least one electric fan and a plurality of flaps or butterfly valves for controlling the air flows in the ducts which terminate at the air outlets of the vehicle air-conditioning system.

A considerable portion of the surface of the dashboard is formed from a transpirable material which allows air to pass through it and in the provision of the means necessary for conducting the air from the interior of the dashboard into the passenger compartment of the motor vehicle through the transpirable material.

More particularly, in a currently preferred embodiment, a very extensive portion, or nearly all, the upper part of the dashboard is transpirable. In practice that portion of the dashboard which is located directly beneath the windscreen is made transpirable.

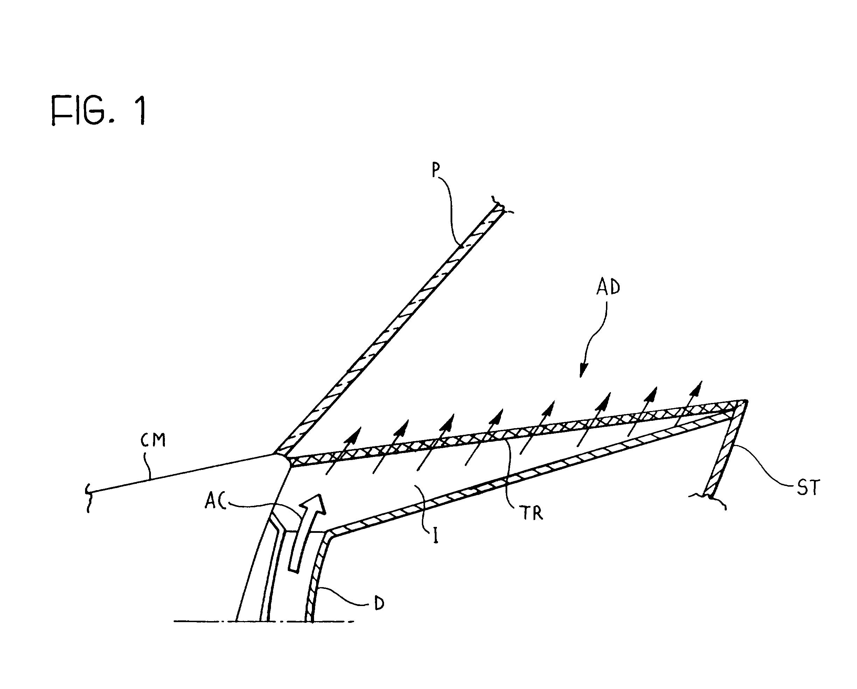

As may be seen from Figure 1, part of a motor vehicle is shown in section, parts of the engine compartment CM and the windscreen P being visible. Beneath the windscreen P is the upper face TR of the dashboard. The front face ST of the dashboard is also partly shown in the drawing. As may be noted, the upper face TR of the dashboard is shown in broken lines to indicate the fact that it is made from a transpirable material, that is, which allows air to pass through.

Within the dashboard there can also be seen, in section, an air duct D for conveying an air flow AC from the vehicle's air-conditioning unit to the underside of the upper face TR of the dashboard. This air flow AC is produced in an entirely conventional manner, by the air-conditioning unit of the motor vehicle and driven for example by means of an electric fan. Given the permeability of the upper face TR of the dashboard, the air flow AC causes air to flow through the entire upper face TR of the dashboard and, in this manner, to pass from the interior of the dashboard into the passenger compartment of the motor vehicle.

This instigates a circulation, or flow, of diffuse air, indicated AD in the drawing, into the passenger compartment through the upper face TR of the dashboard. This diffuse air circulation AD removes excess heat absorbed by the upper face of the dashboard TR as a result of solar radiation and brings its temperature down to acceptable levels.

It is thus clear that the problem of infra-red radiation emitted by the dashboard to the driver may be eliminated.

The air flow AC produced by the air-conditioning unit may simply be passed into the dashboard, typically into a substantial hollow part thereof, or alternatively may be passed into a sort of interspace or channel I for ducting the air flow AC, if this is necessary, towards the upper face of the dashboard TR so as to optimise its passage therethrough.

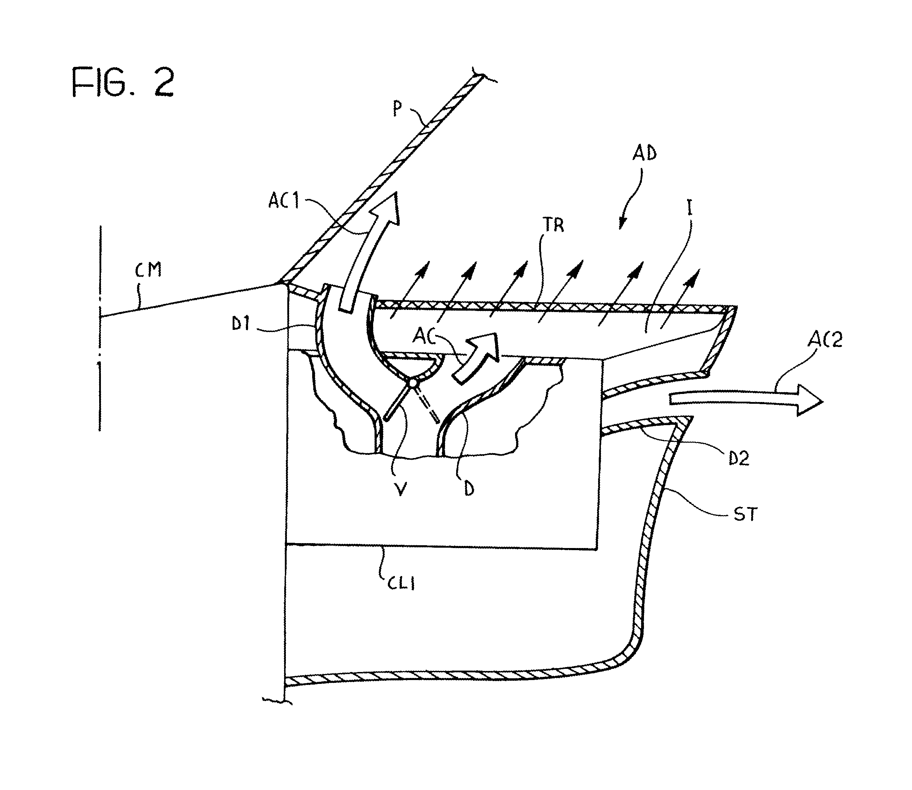

The embodiment shown in Figure 2 enables the air to be ducted so that it can defrost or demist the windscreen P. The air-conditioning unit CLI located within the dashboard may be arranged to generate an air flow AC directed towards the transpirable face of the dashboard TR through a duct D as explained above or, if necessary, it may be directed towards the windscreen P in the form of a concentrated air flow AC1 through a duct D1. Thus, when it is desired to demist or defrost the windscreen P, the air flow produced by the air-conditioning unit CLI may be deflected, for example by means of a movable flap V, towards conventional outlets located at the base of the windscreen P instead of towards the upper transpirable face TR. Similarly the air outlets located on the front part ST of the dashboard may be retained. Concentrated jets of hot or cold air AC2 produced by the air-conditioning units CLI may be emitted through these outlets, being conveyed through air ducts D2 in a conventional manner.

Given the large surface area through which air passes into the passenger compartment, a low-velocity air circulation AD is set up which is particularly advantageous in terms of thermal comfort. Thus disagreeable strong air flows which can cause discomfort and distress to the vehicle occupants are avoided. The fact that concentrated, high speed air flows through conventional air outlets are eliminated also reduces the associated aerodynamic noise which can often be strong and irritating, with considerable advantage to the comfort within the passenger compartment as regards noise levels.

In practice the upper transpirable face TR of the dashboard is made from a substantially laminar material with a plurality of very small through-holes which make it permeable to air. Clearly, in order to facilitate the air circulation, given that these holes are small, there must be a very large number of them per unit surface area. For this purpose it is possible, for example, to make the transpirable face TR from a plastics or elastomeric material having an open-cell structure. The need to have very small through-holes, or micro-holes, also results from the need to give the dashboard a dense outer face, not dissimilar to conventional surfaces of dashboards in current production.

A second embodiment is made with the use of a perforated metal or plastics face (for example a mesh).

When the upper transpirable face TR is made air-permeable by means of micro-holes, it is necessary to filter the air flow AC directed towards it. This is not a serious limitation in practice since the use of filters to improve the quality of air emitted into the passenger compartments of motor vehicles in current production is becoming ever more widespread. Indeed, in the absence of filters, dust and impurities which may be present in the air flow AC could progressively obstruct the micro-holes in the transpirable face TR and render them impermeable to air.

In order to filter the air flow AC, conventional filters known in the art may be used. Typically it is convenient to use replaceable cartridge filters and possibly to use activated carbon filters which can be regenerated by an air flow in the opposite direction.

One of the problems connected with such filters is their bulk within an air duct given that they must have very large surface areas if extreme over-pressures are not to be needed to ensure an adequate air flow. In association with a transpirable dashboard face TR therefore, it is advantageous to use a substantially laminar cartridge or filter which extends over the entire transpirable face TR. The filter thus takes on a laminar form with a very extensive surface corresponding to the surface of the dashboard which makes it readily permeable to air even at modest over-pressures. Moreover, with such a configuration, the filter has almost negligible bulk. In this case it is particularly convenient for the upper part of the dashboard TR to be removable to enable the filter to be replaced. This has the additional advantage of making access to equipment in the dashboard particularly convenient and swift, which access is extremely difficult in modern vehicles.

The present invention may be used either in association with a conventional air-conditioning unit CLI, that is, one adapted to produce an air flow AC at ambient temperature, whether or not taken from the exterior of the motor vehicle, or in association with an air-conditioning unit CLI which has a conditioner able to cool the air and hence produce an air flow AC at a temperature below the ambient temperature. The cooling capacity of the upper face of the dashboard TR is obviously greater when it is used in association with a conditioning unit CLI with a conditioner.

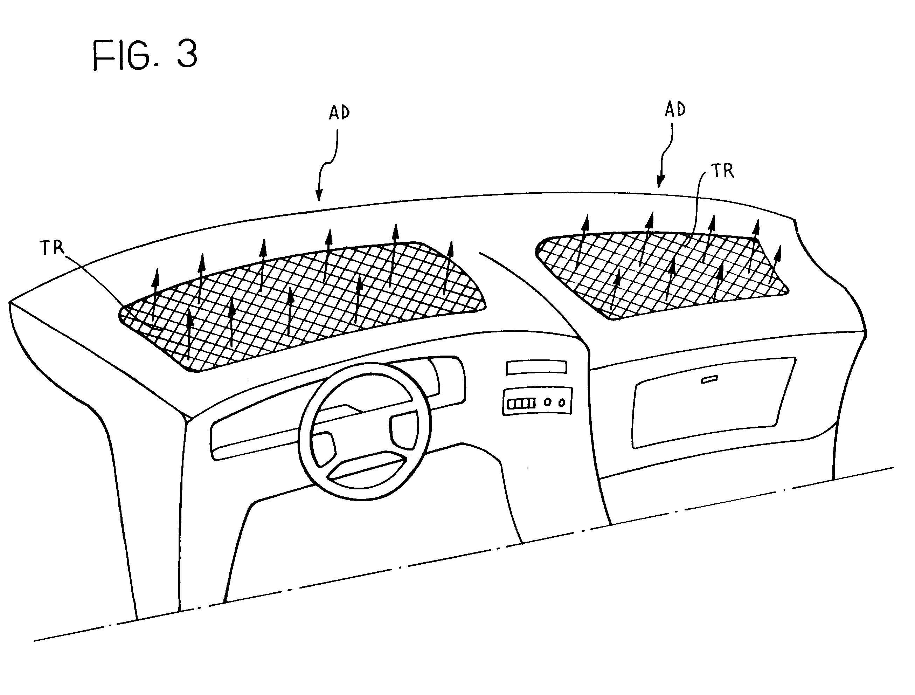

Figure 3 shows a general perspective view of a motor vehicle dashboard to give a better understanding. More particularly, Figure 3 shows an alternative embodiment in which not all the upper face of the dashboard is transpirable but only extensive portions TR thereof. This alternative solution does however achieve the desired effects described above.

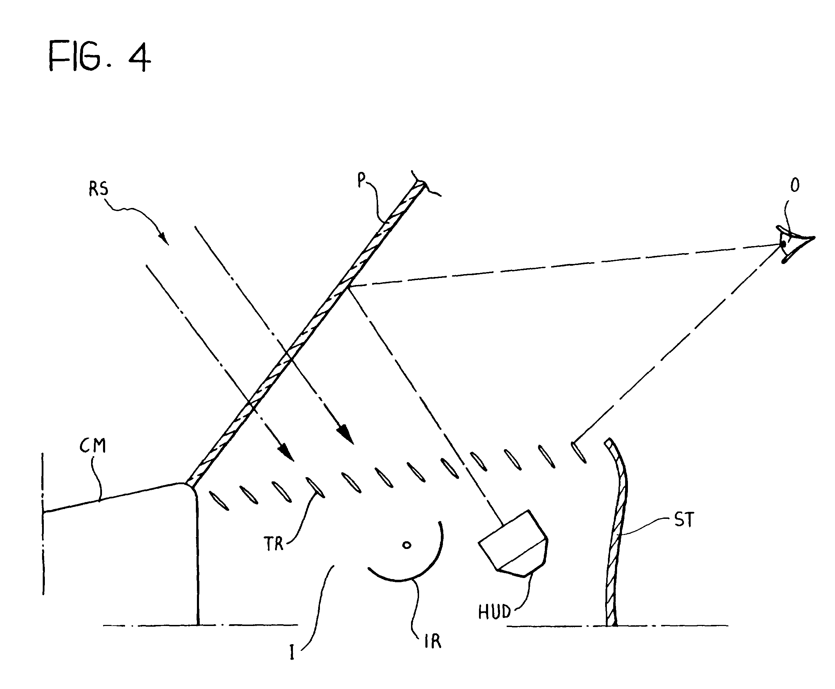

An embodiment of the invention is illustrated in Figure 4. A transpirable surface TR may be made by arranging blades L, or flaps, perpendicular to the face of the dashboard TR and held rigidly together by ribs. The entire structure may, for example, be moulded from plastics material. By arranging the blades L at a suitable inclination, it is possible to make the dashboard coloured if viewed by the user, that is from the interior of the passenger compartment and black (like a cavity) to light entering from the windscreen P. This result is illustrated in Figure 4 in which the position of the driver's eyes is shown at O and two possible view paths are shown in broken lines. Thus the problems of internal reflection which may cause visibility problems are avoided and greater stylistic freedom is offered since the colours of the dashboard TR are not constrained and radiation RS entering from the windscreen P is not diffused or reflected towards the driver or the passenger.

Moreover it is possible to arrange instruments such as projectors HUD for so called "head up display" systems within the dashboard to project images on to the windscreen P between the blades L. Naturally in this case it is not possible to use a laminar filter beneath the transpirable face TR as described above.

Instead it is particularly convenient to use this embodiment in association with an infra-red projector for defrosting the windscreen P. A device of this type is described for example in Italian Patent Application No. TO92A000515 filed on 16 June 1992 in the name of Fiat Auto S.p.A. Even though such instruments defrost windscreens P effectively, they are difficult to use since it is difficult to instal them in positions in which they can irradiate the windscreen P. They also have the further disadvantage of requiring protection so as to avoid the occupants of the passenger compartment touching them inadvertently and being burnt. If, however, the dashboard has an upper transpirable surface TR with blades L according to the lattermost embodiment described, such defrosting devices may conveniently be installed within the dashboard itself. In this position the defrosting devices indicated IR in Figure 4 do not cause problems due to their bulk and are inaccessible to the occupants of the passenger compartment while being able to irradiate the surface of the windscreen P through the dashboard TR.

## Claims

1. An air-conditioning system for a motor vehicle having a front dashboard located in a passenger compartment of the motor vehicle substantially beneath the windscreen (P) and air-conditioning means (CLI) for producing at least one air flow (AC) and in which an extensive portion (TR) of the upper face of the dashboard is permeable to air and the air-conditioning means (CLI) are arranged to direct the at least one air flow (AC) within the dashboard towards the air-permeable portion (TR) of the upper face of the dashboard in order to cause the air to pass through the air-permeable portion (TR) from the interior of the dashboard into the passenger compartment, characterised in that the air-permeable portion (TR) of the upper face of the dashboard is constituted by a plurality of laminar elements (L) of small cross-section arranged in a direction substantially parallel to the base of the motor-vehicle windscreen (P) and each inclined so that one of its edges is turned towards the windscreen (P) whereby the reflection of optical radiation from the upper face (TR) of the dashboard towards the occupants of the motor vehicle by reflection from the inner surface of the windscreen (P) is substantially avoided.

2. A system according to Claim 1, characterised in that it includes duct means (I) for conveying the at least one air flow (AC) towards the inside of the upper face of the dashboard in order to facilitate the passage of air through the air-permeable portion (TR) from the interior of the dashboard to the passenger compartment.

3. A system according to Claim 1 or 2, characterised in that the air-permeable portion (TR) extends substantially over the entirety of the upper face of the dashboard.

4. A system according to Claim 1, 2 or 3, characterised in that the air-permeable portion (TR) is constituted by a plurality of portions of the upper face of the dashboard.

5. A system according to any one of Claims 1 to 4, characterised in that it includes filter means for retaining unwanted substances in the at least one air flow (AC).

6. A system according to Claim 5, characterised in that the filter comprises a replaceable filter element.

7. A system according to Claim 5 or 6, characterised in that the filter comprises an activated carbon filter element.

8. A system according to any one of Claims 1 to 7, characterised in that the laminar elements (L) are of a light colour.

9. A system according to any one of Claims 1 to 8, characterised in that it includes rib elements arranged transverse the laminar elements (L) for supporting them and holding them in position.

10. A system according to any one of Claims 1 to 9, characterised in that it has an associated projector (HUD) for projecting images to the occupants of the motor vehicle by reflection on the inner surface of the windscreen (P), the projector (HUD) being located within the dashboard and the laminar elements (L) being inclined so as to allow the projection of the images.

11. A system according to any one of Claims 1 to 10, characterised in that it has an associated infra-red projector (IR) for heating the windscreen (P) by radiation, the projector (IR) being arranged within the dashboard and the laminar elements (L) being inclined to allow the windscreen (P) to be heated by radiation.

12. A system according to any one of Claims 1 to 11, characterised in that it includes valve means (V) for directing the at least one air flow (AC) towards a duct (Dl) opening to air outlet apertures facing the windscreen (P).

13. A system according to any one of Claims 1 to 12, characterised in that it includes conditioning means (CLI) for cooling of the at least one air flow (AC).

## Patentansprüche

1. Klimaanlage für ein Kraftfahrzeug mit einem in einem Passagierraum des Kraftfahrzeugs im wesentlichen unterhalb der Windschutzscheibe (P) angeordneten vorderen Armaturenbrett und einer Klimatisiereinrichtung (CLI) zur Erzeugung mindestens eines Luftstroms (AC), wobei ein ausgedehnter Abschnitt (TR) der Oberseite des Armaturenbretts luftdurchlässig und die Klimatisiereinrichtung (CLI) so angeordnet ist, dass der mindestens eine Luftstrom (AC) innerhalb des Armaturenbretts zum luftdurchlässigen Abschnitt (TR) der Oberseite des Armaturenbretts gelenkt wird, um zu bewirken, dass die Luft vom Inneren des Armaturenbretts durch den luftdurchlässigen Abschnitt (TR) in den Passagierraum gelangt, dadurch gekennzeichnet, dass der luftdurchlässige Abschnitt (TR) der Oberseite des Armaturenbretts durch eine Mehrzahl von laminaren Elementen (L) mit kleinem Querschnitt gebildet ist, die in einer zur Basis der Windschutzscheibe (P) des Fahrzeugs im wesentlichen parallelen Richtung angeordnet und jeweils derart geneigt sind, dass eine Kante der Windschutzscheibe (P) zugewendet ist, wodurch die Reflexion von optischer Strahlung von der Oberseite (TR) des Armaturenbretts zu den Insassen des Kraftfahrzeugs durch Reflexion von der Innenfläche der Windschutzscheibe (P) im wesentlichen vermieden wird.

2. Anlage nach Anspruch 1, dadurch gekennzeichnet, dass sie Leiteinrichtungen (I) zum Fördern des mindestens einen Luftstroms (AC) zum Inneren der Oberseite des Armaturenbretts zwecks Erleichterung des Durchtritts von Luft durch den luftdurchlässigen Abschnitt (TR) von innerhalb des Armaturenbretts in den Passagierraum aufweist.

3. Anlage nach Anspruch 1 oder 2, dadurch gekennzeichnet, dass sich der luftdurchlässige Abschnitt (TR) im wesentlichen über die gesamte Oberseite des Armaturenbretts erstreckt.

4. Anlage nach Anspruch 1, 2 oder 3, dadurch gekennzeichnet, dass der luftdurchlässige Abschnitt (TR) durch eine Mehrzahl von Abschnitten der Oberseite des Armaturenbretts gebildet ist.

5. Anlage nach einem der Ansprüche 1 bis 4, dadurch gekennzeichnet, dass sie Filtereinrichtungen zum Zurückhalten unerwünschter Stoffe in dem mindestens einen Luftstrom (AC) aufweist.

6. Anlage nach Anspruch 5, dadurch gekennzeichnet, dass das Filter ein austauschbares Filterelement umfasst.

7. Anlage nach Anspruch 5 oder 6, dadurch gekennzeichnet, dass das Filter ein Aktivkohlefilterelement umfasst.

8. Anlage nach einem der Ansprüche 1 bis 7, dadurch gekennzeichnet, dass die laminaren Elemente (L) von heller Farbe sind.

9. Anlage nach einem der Ansprüche 1 bis 8, dadurch gekennzeichnet, dass sie quer zu den laminaren Elementen (L) angeordnete Rippenelemente zur Abstützung derselben und zum Halten derselben in ihrer Position aufweist.

10. Anlage nach einem der Ansprüche 1 bis 9, dadurch gekennzeichnet, dass sie einen zugehörigen Projektor (HUD) zum Projizieren von Bildern zu den Insassen des Kraftfahrzeugs durch Reflexion an der Innenfläche der Windschutzscheibe (P) aufweist, wobei der Projektor (HUD) innerhalb des Armaturenbretts angeordnet ist und die laminaren Elemente (L) zur Ermöglichung der Projektion der Bilder geneigt sind.

11. Anlage nach einem der Ansprüche 1 bis 10, dadurch gekennzeichnet, dass sie einen zugehörigen Infrarot-Projektor (IR) zum Beheizen der Windschutzscheibe (P) durch Strahlung aufweist, wobei der Projektor (IR) innerhalb des Armaturenbretts angeordnet ist und die laminaren Elemente (L) zur Ermöglichung des Beheizens der Windschutzscheibe (P) durch Strahlung geneigt sind.

12. Anlage nach einem der Ansprüche 1 bis 11, dadurch gekennzeichnet, dass sie Ventileinrichtungen (V) zum Lenken des mindestens einen Luftstroms (AC) zu einer Leitung (DI) aufweist, die in zur Windschutzscheibe (P) gerichteten Luftaustrittsöffnungen mündet.

13. Anlage nach einem der Ansprüche 1 bis 12, dadurch gekennzeichnet, dass sie Klimatisiereinrichtungen (CLI) zum Kühlen des mindestens einen Luftstroms (AC) aufweist.

## Revendications

1. Système de conditionnement d'air pour un véhicule à moteur ayant un tableau de bord disposé dans un compartiment de passager du véhicule à moteur sensiblement sous le pare-brise (P) et des moyens de conditionnement d'air (CLI) destinés à produire au moins un écoulement d'air (AC) et dans lequel une partie importante (TR) de la face supérieure du tableau de bord est perméable à l'air et les moyens de conditionnement d'air (CLI) sont prévus pour diriger le au moins un écoulement d'air (AC) à l'intérieur du tableau de bord vers la partie perméable à l'air (TR) de la face supérieure du tableau de bord de façon à amener l'air à passer à travers la partie perméable à l'air (TR) de l'intérieur du tableau de bord dans le compartiment de passager, caractérisé en ce que la partie perméable à l'air (TR) de la face supérieure du tableau de bord est constituée par plusieurs éléments laminaires (L) de faible section disposés dans une direction sensiblement parallèle à la base du pare-brise de véhicule à moteur (P) et inclinés chacun de telle sorte qu'un de ses bords est tourné vers le pare-brise (P) de sorte que la réflexion du rayonnement optique de la face supérieure (TR) du tableau de bord vers les occupants du véhicule à moteur par réflexion depuis la surface interne du pare-brise (P) est sensiblement évitée.

2. Système selon la revendication 1, caractérisé en ce qu'il comprend des moyens de conduite (I) destinés à transporter le au moins un écoulement d'air (AC) vers l'intérieur de la face supérieure du tableau de bord afin de faciliter le passage d'air à travers la partie perméable à l'air (TR) de l'intérieur du tableau de bord vers le compartiment de passager.

3. Système selon la revendication 1 ou 2, caractérisé en ce que la partie perméable à l'air (TR) s'étend sur sensiblement la totalité de la face supérieure du tableau de bord.

4. Système selon la revendication 1, 2 ou 3, caractérisé en ce que la partie perméable à l'air (TR) est constituée par plusieurs parties de la face supérieure du tableau de bord.

5. Système selon l'une quelconque des revendications 1 à 4, caractérisé en ce qu'il comprend des moyens de filtre destinés à retenir des substances indésirables dans le au moins un écoulement d'air (AC).

6. Système selon la revendication 5, caractérisé en ce que le filtre comporte un élément de filtre remplaçable.

7. Système selon la revendication 5 ou 6, caractérisé en ce que le filtre comporte un élément de filtre à charbon actif.

8. Système selon l'une quelconque des revendications 1 à 7, caractérisé en ce que les éléments laminaires (L) sont de couleur claire.

9. Système selon l'une quelconque des revendications 1 à 8, caractérisé en ce qu'il comprend des éléments de nervure disposés transversalement aux éléments laminaires (L) afin de les supporter et les maintenir en position.

10. Système selon l'une quelconque des revendications 1 à 9, caractérisé en ce qu'il possède un projecteur associé (HUD) destiné à projeter des images vers les occupants du véhicule à moteur par réflexion sur la surface interne du pare-brise (P), le projecteur (HUD) étant disposé à l'intérieur du tableau de bord et les éléments laminaires (L) étant inclinés de façon à permettre la projection des images.

11. Système selon l'une quelconque des revendications 1 à 10, caractérisé en ce qu'il possède un projecteur infrarouge associé (IR) destinée à chauffer le pare-brise (P) par rayonnement, le projecteur (IR) étant disposé à l'intérieur du tableau de bord et les éléments laminaires (L) étant inclinés de façon à permettre au pare-brise (P) d'être chauffé par rayonnement.

12. Système selon l'une quelconque des revendications 1 à 11, caractérisé en ce qu'il comprend des moyens de vanne (V) destinés à diriger le au moins un écoulement d'air (AC) vers une conduite (D1) qui s'ouvre sur des ouvertures de sortie d'air face au pare-brise (P).

13. Système selon l'une quelconque des revendications 1 à 12, caractérisé en ce qu'il comprend des moyens de conditionnement (CLI) destinés à refroidir le au moins un écoulement d'air (AC).
